(19) Europäisches Patentamt
European Patent Office
Office européen des brevets

(11) **EP 3 054 778 B1**

(12) **EUROPEAN PATENT SPECIFICATION**

(45) Date of publication and mention
of the grant of the patent:
**14.06.2017 Bulletin 2017/24**

(21) Application number: **14781189.7**

(22) Date of filing: **07.10.2014**

(51) Int Cl.:
*A23F 5/40* *(2006.01)*     *A23F 5/48* *(2006.01)*
*A23F 5/26* *(2006.01)*     *A23F 5/28* *(2006.01)*

(86) International application number:
**PCT/EP2014/071398**

(87) International publication number:
**WO 2015/052161 (16.04.2015 Gazette 2015/15)**

(54) **METHOD OF PRODUCING A COFFEE BEVERAGE POWDER**

VERFAHREN ZUR HERSTELLUNG EINES PULVERIGEN KAFFEEGETRÄNKS

PROCÉDÉ DE PRODUCTION D'UNE POUDRE DE BOISSON AU CAFÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **11.10.2013 EP 13188249**

(43) Date of publication of application:
**17.08.2016 Bulletin 2016/33**

(73) Proprietor: **Nestec S.A.**
**1800 Vevey (CH)**

(72) Inventors:
• **DAENZER-ALLONCLE, Martine**
**F-25370 Les Hôpitaux Neufs (FR)**
• **KERLER, Josef**
**Singapore 588637 (SG)**
• **POISSON, Luigi**
**1796 Courgevaux (CH)**
• **WYSS, Heinz**
**CH-3672 Oberdiessbach (CH)**

(74) Representative: **Krishnan, Sri**
**Nestec S.A.**
**Centre de Recherche Nestlé**
**Vers-chez-les-Blanc**
**Case Postale 44**
**1000 Lausanne 26 (CH)**

(56) References cited:
**EP-A1- 1 000 548**     **EP-A1- 1 129 624**
**EP-A2- 1 078 575**     **WO-A1-99/52378**

**Description**

**Field of the invention**

The present invention relates to the preparation of a coffee beverage powder useful for the preparation of coffee beverages such as e.g. cappuccino, café latte, café macchiato, café au lait.

**Background**

Coffee beverage powders comprising coffee extract and milk, dairy whitener, and/or coffee creamer ingredients may be used to prepare creamed coffee beverages and coffee beverages such as cappuccino, café latte, café macchiato, café au lait, and the like. Such beverages derive their coffee taste and aroma from soluble coffee extract and are normally produced by dry mixing of soluble coffee powder with creamer powder and optionally sweetener. The coffee aroma may be enhanced by the addition of natural or synthetic coffee aroma to the soluble coffee powder and/or to the creamer powder, but it has been found that such aroma may not provide the desired aroma release upon preparation and consumption and that the aroma may be lost during storage of the powder. There is thus a need to increase the aroma release and stability of coffee aroma in such powders, and especially the stability of natural coffee aroma, as many consumers wish to avoid synthetic additives. WO 99/52378 discloses a method for producing instant coffee powder in which an aqueous slurry of roast and ground coffee beans is stripped with steam, the stripped coffee grinds are extracted with water to provide a concentrated coffee extract containing 40% by weight of dry matter of coffee solids, the stripped coffee aroma is added to the concentrated coffee extract and the mixture of said extract and said aroma is spray-dried to form a powder.

**Summary of the invention**

The present inventors have found that the stability of natural coffee aroma obtained by stripping aroma from roast and ground coffee is improved in coffee beverage powders comprising a creamer component, when the coffee aroma is added to an aqueous composition comprising coffee extract and all or part of the creamer ingredients, and the aqueous composition is dried. The present invention relates to a method of producing a coffee beverage powder which is useful for the preparation of a coffee beverage comprising a coffee creamer. According to the method of the invention coffee extract and all or part of the creamer ingredients are mixed in an aqueous composition and dried, as opposed to the conventional way of manufacturing such powders wherein coffee extract and creamer ingredients, respectively, are dried separately into soluble coffee powder and creamer powder, the powders being mixed in dry form to produce the final beverage powder. Consequently, the present invention relates to a process of producing a coffee beverage powder, the process comprising: a) stripping aroma from roast and ground coffee beans and/or coffee extract with gas and/or steam; b) extracting roast and ground coffee beans with an aqueous liquid to produce an aqueous coffee extract; c) preparing an aqueous composition comprising at least 5% by weight of dry matter of coffee solids extracted in step b), and at least 5% by weight of dry matter of compounds not derived from coffee selected among fat and protein; d) adding coffee aroma obtained in step a) to aqueous composition provided in step c); and e) drying the aqueous composition with added coffee aroma to produce a coffee beverage powder.

**Detailed description of the invention**

According to the process of the present invention aroma is stripped from roast and ground coffee beans and/or coffee extract with gas and/or steam. Coffee beans may be derived from any coffee plant, e.g. from Arabica or Robusta coffee plants, and may be a blend of coffee beans from different varieties, e.g. from Arabica and Robusta. Stripping of aroma from roast and ground coffee beans and from coffee extract is well known in the art of soluble coffee production. In soluble coffee production, the aim of aroma stripping is usually to capture volatile aroma compounds before the extraction of the roast and ground coffee beans to avoid loss of these compounds during subsequent extraction and evaporation steps. The captured aroma may be added back to the coffee extract at a later stage in the production. Stripping may be performed on dry roast and ground coffee beans, on moistened roast and ground coffee beans, on a slurry of roast and ground coffee beans in an aqueous liquid, and/or on a coffee extract produced by extracting soluble solids from roast and ground coffee beans with an aqueous liquid. Stripping is performed with a gas and/or steam. The gas used for stripping may e.g. be atmospheric air, nitrogen, carbon dioxide, and/or mixtures thereof. The aroma stripped from the roast and ground coffee beans and/or coffee extract may be captured from the stripping gas by any suitable means, e.g. by cooling and/or compression of the gas to condensate aroma compounds. Aroma compounds may be captured in an aqueous liquid and/or in oil. Suitable methods for stripping aroma from roast and ground coffee beans and/or from coffee extract, and/or capturing the gas, are e.g. disclosed in WO 99/52378, WO 01/13735, WO 2011076564, and EP 0532959.

In a further step of the process of the present invention roast and ground coffee beans are extracted with an aqueous liquid to produce an aqueous coffee extract. Any suitable method for extraction of roast and ground coffee beans may be used. Such methods are well known in the art of soluble coffee extraction, and usually comprise several subsequent extraction steps at different temperature and pressure. The aqueous liquid used to extract the roast and ground coffee beans may be water or any other suitable aqueous liquid. For example, if extraction is performed in several subsequent extraction steps, the extract obtained from some steps may be used for the extraction performed in other steps. Suitable methods for extraction of roast and ground coffee beans with an aqueous liquid are e.g. disclosed in EP 0916267 and EP 0826308. The extraction performed in step b) of the process of the present invention may preferably be performed on the roast and ground coffee beans subjected to aroma stripping in step a) of the process, or a part hereof, or it may be performed on a different portion of roast and ground coffee beans. The aqueous coffee extract obtained from the extraction may be used as is in the further steps of the process of the invention, or it may be subjected to additional treatment, e.g. concentration, e.g. concentration by evaporation and/or filtration, e.g. ultra-filtration or reverse osmosis. It may also be dried, e.g. by spray drying or freeze drying, to produce a coffee extract powder. In a preferred embodiment of the process of the invention the extract is not subjected to concentration before the drying in step e).

The aqueous coffee extract obtained by the extraction of roast and ground coffee beans is used for the preparation of an aqueous composition comprising at least 5% by weight of dry matter of coffee solids obtained from the extraction, and at least 5% by weight of dry matter of compounds not derived from coffee and selected from fat, protein, and combinations thereof. The aqueous composition preferably comprises between 5% and 95% by weight of dry matter of coffee solids obtained from the extraction, more preferably between 5% and 80%, even more preferably between 10% and 60%, and most preferably between 10% and 40%. The coffee extract may be added as a liquid, if desired after concentration of the liquid extract, and/or as a powder if drying of the extract has been performed.

The aqueous composition preferably comprises between 5% and 95% by weight of dry matter of compounds not derived from coffee and selected from fat, protein, and combinations thereof, more preferably between 20% and 95%, even more preferably between 40% and 90%, and most preferably between 60% and 90%. By compounds not derived from coffee is meant compounds that have not been obtained from any part of a coffee plant (*Coffea*), e.g. by extraction and/or fractionation. Fat not derived from coffee may be any fat or oil not derived from coffee, e.g. oil of vegetable origin such as e.g. palm kernel oil, hydrogenated palm kernel oil, canola oil, soy bean oil, sunflower oil, safflower oil, cotton seed oil, palm oil, corn oil, and/or coconut oil; and/or fat of animal origin such as milk fat. Milk fat may e.g. be provided in the form of milk, milk powder, butter milk, butter milk powder, cream, cream powder, butter, butterfat, anhydrous milk fat and combinations thereof. The aqueous composition prepared in step c) of the process of the invention usually comprises between 0% and 60% by weight of dry matter of fat not derived from coffee, such as e.g. 0%, between 5% and 40%, between 5% and 15%, and between 15% and 60%. Protein not derived from coffee may be any protein not derived from coffee such as milk protein, and/or vegetable protein. Milk protein may e.g. be provided in the form of milk, cream, milk powder, cream powder, fat free milk solids (MSNF), whey powder, whey protein, whey protein concentrate, whey protein isolate, casein, caseinate, and combinations thereof. Vegetable protein may e.g. be wheat protein, soy protein, soy protein isolate, pea protein, and combinations thereof. The aqueous composition prepared in step c) of the process of the invention usually comprises between 0% and 50% by weight of dry matter of protein not derived from coffee, such as e.g. 0%, between 0.1% and 50%, between 0.2% and 40%, and between 0.5% and 20%.

The aqueous composition prepared in step c) of the process of the invention may further comprise any ingredient suitable as a component of the beverage powder being produced by the method of the invention. Such further ingredients include ingredients normally used in a coffee beverage powder.

The aqueous composition prepared in step c) of the process of the invention may comprise emulsifiers, e.g. emulsifiers selected from the group consisting of monoglycerides, diglycerides, acetylated monoglycerides, sorbitan trioleate, glycerol dioleate, sorbitan tristearate, propyleneglycol monostearate, glycerol monooleate and monostearate, sorbitan monooleate, propylene glycol monolaurate, sorbitan monostearate, sodium stearoyl lactylate, calcium stearoyl lactylate, glycerol sorbitan monopalmitate, diacetylated tartaric acid esters of monoglycerides, lecithins, lysolecithins, succinic acid esters of mono- and/or diglycerides, lactic acid esters of mono- and/or diglycerides, lecithins, lysolecitins, proteins and sucrose esters of fatty acids, lecithin (e.g. soy lecithin, canola lecithin, sunflower lecithin, and/or safflower lecithin), lysolecithins, and combinations thereof. Emulsifiers may be used to provide a similar functionality as protein and may thus, in whole or in part, replace protein that would otherwise have been used in the composition

The aqueous composition prepared in step c) of the process of the invention may comprise sugars, e.g. one or more sugars selected from the group consisting of lactose, sucrose, fructose, maltose, dextrin, levulose, tagatose, galactose, dextrose, maltodextrin, tapiocadextrin, glucose syrup, tapioca syrup, an combinations thereof. In a preferred embodiment the aqueous composition comprises maltodextrin and/or tapioca dextrin, e.g. in the form of viscous syrup. The presence of maltodextrin and/or tapioca dextrin may help in the protection of the coffee aroma in the composition before, during and/or after drying. The aqueous composition preferably comprises between 1% and 75% by weight of dry matter of maltodextrin and/or tapiocadextrin, such as between 5% and 70%, between 10% and 60%, and between 15% and 50%.

The aqueous composition prepared in step c) of the process of the invention may comprise salts, e.g. sodium chloride, buffering and/or stabilising salts. Buffering and stabilising salts may e.g. be sodium or potassium ortho phosphates such as monophosphates, diphosphates or triphosphates, sodium or potassium polyphosphates, sodium or potassium mono- or bicarbonates, sodium or potassium citrates, hexametaphosphate or a combination thereof. Buffering and stabilising salts may e.g. be present in an amount of from 0.1% to 5% by weight of dry matter.

The aqueous composition prepared in step c) of the process of the invention may further comprise ingredients such as flavour, aroma, colorant, antioxidant, and sugarless sweeteners. Sugarless sweeteners can include, but are not limited to, sugar alcohols such as maltitol, xylitol, sorbitol, erythritol, mannitol, isomalt, lactitol, hydrolysed starches, and the like, alone or in combination. Usage level of flavours, aromas, sweeteners and colorants will vary greatly and will depend on such factors as potency of the sweetener, desired sweetness of the product, level and type of flavour used and cost considerations. Combinations of sugar and sugarless sweeteners may be used to obtain desired sweetness of the final product.

The aqueous composition prepared in step c) may comprise starch and/or other hydrocolloids such as e.g. acacia gum, xanthan gum, and carrageenan. Starch includes e.g. modified starch such as N-Octenylsuccinyl starch (NOSA-starch). Modified starch, such as NOSA-starch, may be used to provide a similar functionality as protein and may thus, in whole or in part, replace protein that would otherwise have been used in the composition.

The aqueous composition prepared in step c) may be prepared by simple mixing of the ingredients, or by any other suitable method. If the aqueous coffee extract is in liquid form, the other ingredients may be added to the liquid extract and dissolved/dispersed therein. Additional water may be added, if desired. If the aqueous coffee extract is in powder form it may e.g. be dissolved in water before mixing with the other ingredients or it may be added to an aqueous solution/dispersion of the remaining ingredients, or part of the remaining ingredients. The pH of the aqueous composition may be adjusted, e.g. to ensure the stability of any protein present in the composition, the pH may e.g. be adjusted to a pH between 5.5 and 7.5, preferably between 6.0 and 7.5. If the aqueous composition is heat treated, any pH adjustment is preferably performed before the heat treatment. The aqueous composition may be homogenised to ensure emulsification and even dispersion of any fat.

The aqueous composition prepared in step c) of the process of the invention may be heat treated to ensure stability and microbiological safety of the final product, for example the aqueous composition may be pasteurised. In a one embodiment the aqueous composition prepared in step c) is heat treated at a temperature of at least 65°C, e.g. at a temperature of at least 65°C for at least 30 minutes. In another embodiment the aqueous composition prepared in step c) is heat treated at a temperature of at least 70°C, e.g. at a temperature of at least 70°C for at least 15 seconds. In a preferred embodiment the aqueous composition prepared in step c) is heat treated at a at least pasteurisation conditions before the addition of coffee aroma of step d).

According to the process of the invention coffee aroma obtained by the stripping of roast and ground coffee beans and/or coffee extract with gas and/or steam performed in step a) of the process is added to the aqueous composition provided in step c). The aroma may be added in any suitable way, e.g. by simple mixing into the aqueous composition. The aroma is preferably added immediately before the drying in step e) to avoid any degradation of aroma before drying. Preferably the aroma is added to the aqueous composition in a closed system to avoid oxidation of the aroma before drying. The aroma obtained in step a) may be added in the form of an aqueous solution or suspension, and/or it may be dissolved or suspended in oil. If the aroma is dissolved or suspended in oil, and the aqueous composition prepared in step c) comprises fat, the aroma may be added directly to the fat, or part of the fat, before the fat is mixed with the other ingredients used to prepare the aqueous composition of step c). If the aqueous composition is heat treated before the drying of step e), the aroma may preferably be added to the aqueous composition after the heat treatment to avoid any negative effects of the heat treatment on the aroma.

Gas may be injected into the aqueous composition provided in step c) before the drying in step e) to create a more porous powder and increase the foam creation and/or the foam stiffness when the powder is dissolved in water to prepare a coffee beverage. Methods for injection gas into a liquid stream are known in the art of soluble coffee and coffee creamer production. Any suitable gas may be used, such as e.g. nitrogen, carbon dioxide, atmospheric gas and combinations thereof. The gas is preferably an inert gas. In a preferred embodiment the gas is nitrogen.

The aqueous composition with added coffee aroma is dried to produce a dry coffee beverage powder. Drying may be performed by any suitable method known in the art, e.g. by spray drying, freeze drying, vacuum band drying, and/or roller drying. In a preferred embodiment drying is performed by spray drying.

Additional ingredients may be added during or after drying. For example, high levels of sugars in the aqueous composition may reduce the drying performance and result in powder sticking within a spray drying tower. For this reason sugars may, in whole or in part, be added during or after drying.

**EXAMPLES**

**Example 1**

Roast and ground Robusta coffee beans were stripped with steam by the method disclosed in WO 01/13735 (VAX) to produce an aqueous preparation of coffee aroma. After aroma stripping the roast and ground coffee was extracted with water as conventionally done for the production of soluble coffee to produce an aqueous coffee extract.

Conventional coffee beverage powder

An aqueous coffee extract produced as described above was concentrated by evaporation to a solids content of 45-65% by weight. The aroma obtained from stripping of the roast and ground coffee was added to the concentrated extract and the extract was dried by spray drying to produce an aromatised soluble coffee powder.

A coffee creamer powder was produced by producing an aqueous solution of acid casein, maltodextrin, potassium phosphate, sodium hydroxide, sodium citrate, and sodium hexametaphosphate. A mixture of hydrogenated palm kernel oil and emulsifiers was mixed into the aqueous solution and the resulting mixture was homogenised, pasteurised and dried by spray drying to produce a creamer powder.

A coffee beverage powder with the composition given in table 1 was produced by dry mixing the soluble coffee powder and creamer powder produced as described above and adding sugar.

Coffee beverage powder of the invention

An aqueous coffee extract produced as described above from the same batch of roast and ground Robusta coffee beans was concentrated by evaporation to a solids content of 45-65% by weight. Afterwards acid casein, maltodextrin, potassium phosphate, sodium hydroxide, sodium citrate, and sodium hexametaphosphate was added to the coffee extract. A mixture of hydrogenated palm kernel oil and emulsifiers was then mixed into the composition, and the total composition was homogenised and pasteurised and pumped to a spray drying tower. The aroma obtained from stripping of the roast and ground coffee was injected into the total composition immediately before the spray drying step. The total composition was spray dried to produce a powder and sugar was added, to produce a coffee beverage powder with the composition given in table 1.

The conventional coffee beverage powder and the coffee beverage powder of the invention produced above were compared. The conventional powder had the conventional appearance of a mixture of dark coffee powder and white sugar and creamer particles. The coffee beverage powder of the invention had an attractive homogenous appearance and a light brown "café-au-lait" colour. Both powders were dissolved in hot water to produce a coffee beverage. The beverage produced from the coffee powder of the invention had a stronger coffee aroma and stronger roasty and nutty aroma notes as compared to the conventional coffee beverage powder.

Table 1. Composition of coffee beverage powders

| Ingredient | % by weight |
|---|---|
| Sugar | 45.56 |
| Maltodextrin DE=29 | 22.02 |
| Hydrogenated palm kernel oil | 13.35 |
| Acid casein | 0.98 |
| $K_2HPO_4$ | 1.18 |
| NaOH | 0.04 |
| $Na_3$-citrate | 0.12 |
| Na-hexametaphosphate | 0.12 |
| Emulsifiers | 0.20 |
| Coffee extract solids | 13.43 |
| Water | 3.00 |

### Example 2

Roast and ground Robusta coffee beans were stripped with steam by the method disclosed in WO 01/13735 to produce an aqueous preparation of coffee aroma. After aroma stripping the roast and ground coffee was extracted with water as conventionally done for the production of soluble coffee to produce an aqueous coffee extract.

Conventional coffee beverage powder

An aqueous coffee extract produced as described above was concentrated by evaporation to a solids content of 45-65% by weight. The aroma obtained from stripping of the roast and ground coffee was added to the concentrated extract and the extract was dried by spray drying to produce an aromatised soluble coffee powder.

A coffee creamer powder was produced by producing an aqueous solution of acid casein, maltodextrin, potassium phosphate, sodium hydroxide, sodium citrate, and sodium hexametaphosphate. A mixture of hydrogenated palm kernel oil and emulsifiers was mixed into the aqueous solution and the resulting mixture was homogenised, pasteurised and dried by spray drying to produce a creamer powder.

A coffee beverage powder with the composition given in table 1 was produced by dry mixing the soluble coffee powder and creamer powder produced as described above and adding sugar.

Coffee beverage powder of the invention

An aqueous coffee extract was produced as described above from the same batch of roast and ground Robusta coffee beans. Acid casein, maltodextrin, potassium phosphate, sodium hydroxide, sodium citrate, and sodium hexametaphosphate was added to the coffee extract. A mixture of hydrogenated palm kernel oil and emulsifiers was then mixed into the composition, and the total composition was pasteurised and homogenised and pumped to a spray drying tower. The aroma obtained from stripping of the roast and ground coffee was injected into the total composition immediately before the spray drying step. The coffee extract was not subjected to concentration before the spray drying step. The total composition was spray dried to produce a powder and sugar was added, to produce a coffee beverage powder with the composition given in table 1.

The conventional coffee beverage powder and the coffee beverage powder of the invention produced above were compared. The conventional powder had the conventional appearance of a mixture of dark coffee powder and white sugar and creamer particles. The coffee beverage powder of the invention had an attractive homogenous appearance and a light brown "café-au-lait" colour. Both powders were dissolved in hot water to produce a coffee beverage. The beverage produced from the coffee powder of the invention had a stronger coffee aroma and stronger roasty and nutty aroma notes as compared to the conventional coffee beverage powder. The aroma difference between the two coffee beverage powders was even more pronounced than what was observed for example 1.

### Example 3

Roast and ground Robusta coffee beans were stripped with steam to produce an aqueous preparation of coffee aroma using the method disclosed in WO 2011076564. After aroma stripping the roast and ground coffee was extracted with water as conventionally done for the production of soluble coffee to produce an aqueous coffee extract.

Coffee beverage powder

An aqueous coffee extract produced as described above was concentrated by evaporation to total solids content of 50 - 60% by weight.

In parallel, a typical creamer was produced by mixing in water the ingredients Corn Syrup, Hydrogenated palm kernel oil, Sugar, Sodium Caseinate, Dipotassium Phosphate, Sodium Hexametaphosphate, Trisodium Citrate and emulsifiers and stirred in a vessel at 60°C. These two mixes were then combined and stirred between 40°C - 50°C in a vessel.

The aroma obtained from the stripping of the roast and grounded coffee was added before the heat treatment.

The final mix was pasteurised at 82-87°C during 100 sec -180 sec and homogenized at a total pressure of 200 - 250 bar.

An inert gas (e.g. nitrogen) was injected into the aqueous composition before spray drying, thus to create a porous powder and to form a foam layer when the powder is dissolved in hot water to prepare the final coffee beverage.

The above mix was then spray dried between 75°C - 90°C

The coffee beverage powder of example 3 showed a homogeneous appearance and a brown colour. The composition of the coffee beverage powder of the invention is summarised in table 2.

The sweetness of the coffee beverage powder dissolved in water can be adjusted by adding sucrose into the coffee powder or into the final beverage.

Compared to the conventional coffee beverage powder, the coffee powder of example 3 had a more pronounced coffee smell above the cup and an overall stronger coffee aroma taste. The homogeneous foam layer above the beverage layer gives to the final beverage in the cup an attractive apperance.

Table 2. Composition of coffee beverage powder

| Ingredient | % by weight |
|---|---|
| Corn Syrup | 44.1 |
| Hydrogenated palm kernel oil | 21.3 |
| Coffee extract solids | 18.1 |
| Sucrose | 10.0 |
| Sodium Caseinate | 1.50 |
| Dipotassium Phosphate | 0.78 |
| Sodium Hexametaphosphate | 0.53 |
| Trisodium Citrate | 0.53 |
| Emulsifiers | 0.31 |
| Water | 3.00 |

**Example 4**

100% Robusta coffee was roasted and ground and aroma is recovered by the method described in US 6,455,093. The coffee was extracted by a conventional extraction process to give an extract having coffee solids content of 12.7 % by weight.

For each part of coffee solids was added 0.08 parts of buffer salt (potassium phosphate). This mix was then heated at a temperature above 60°C. A dry-mix of maltodextrin (DE 29) (0.71 parts), sodium caseinate (0.11 parts) non-fat milk solids (0.91 parts) and sucrose (2.43 parts) was added. Finally hydrogenated palm kernel oil (1.40 parts) was added. The mixture was then passed through a colloid mill. After addition of the recovered coffee aroma, the mixture was heat treated at 85°C and homogenized (180/20 bars). The resulting mixture was spray dried in a conventional spray drying tower using a single fluid nozzle and in which the spraying chamber temperature was about 90°C.

**Example 5**

The concentrations (in ppm dry coffee solids) of the 26 key aroma and flavour compounds were determined for a reconstituted drink made from the simultaneously dried mixture of Example 4 and for a reference drink made from a mixture of soluble coffee made from the same roast and ground coffee, dry mixed with the same amount of creamer and sweetener).

Sample preparation

Coffee beverage powders were reconstituted in water at a total solids content (Ts) of 15% for the analysis of sulfur compounds, pyrazines (analytical group 1) and furfuryl compounds and diketones (analytical group 3) as well as at a Ts of 10% for aldehydes, phenols and pyrroles/furan/pyridine (analytical group 2). The coffee beverages were spiked with isotopically labelled standard molecules (one standard per analyte; standards are molecules with the same structure as the analytes, containing deuterium or $C^{13}$ atoms) in amounts that are similar to the respective analyte (ratio between analyte and standard should range from 0.2 to 5) to analyse compounds of the analytical groups 1 and 2 as well as diketones in analytical group 3 (grouping was done to tailor analytical parameters and ensure good sensitivity (impacted by introduction of solvent of stock solutions of labelled standards)). For the analysis of sulfur compounds, cysteine (500 mg/g coffee solids) was additionally added to slow down reactions of thiols with coffee solids during sample equilibration. For the analysis of the furfuryl compounds, 3-thiophenecarbaldehyde was used as internal standard. After standard addition, samples were stirred for 30 min. and aliquots (7ml) were put into silanised glass vials (20ml) that were sealed (standard vials used for headpsace/SPME analysis).

Extraction of aroma

The reconstituted coffee beverages were equilibrated for 60 min. at RT in the sealed vials and the aroma compounds were then extracted from the headspace during 30 min. at 30°C (analytical groups 1 and 2) and 60°C (analytical group 3) using Solid Phase Micro Extraction (SPME; 1.5 mm fibre coated with PDMS/DVB/ carboxen). Aroma compounds were thermally desorbed at 240°C and injected into a gc/ms apparatus.

Gc/ms analysis

The injected volatiles were separated on a DB-WAX column using the following temperature program: 40°C isotherm for 6 min., at 4°C/min. to 250°C, 250°C isotherm for 6.5 min. Specific fragments of analyte and (labelled) standards were recorded at 70eV (EI mode) using a Quadrupol mass spectrometer (MD 800, Finnigan).

Data consolidation

Data were consolidated by means of Xcalibur software. Concentrations of analytes in ppm dry coffee solids were calculated by using the following equations:

$$(1)\ Ca' = Qst \times Pa/Pst \times Rf \times Fr \times 1000/Wcb$$

$$(2)\ Ca = Ca' \times 100/Wcs$$

wherein

Ca' = concentration of analyte [ppm dry coffee beverage]
Qst = quantity of added labelled/internal standard [mg]
Pa = peak area analyte
Pst = peak area standard
Rf = response factor (determined on gc/ms)
Fr = recovery factor (for analytes relative to standard; in case of labelled standards, factor is around 1 or exactly 1)
Wcb = weight of coffee beverage used for analysis [g]
Ca = concentration of analyte [ppm dry coffee solids]
Wcs = weight % of coffee solids in coffee beverage

The results that are shown in Table 3 reveal that the coffee beverage of the present invention contains significantly higher levels of key odorant groups such as pyrazines (318%), phenols (355%), aldehydes (249%) and furfuryl compounds (327%) as well as slightly higher levels of aldehydes (124%) sulfur compounds (157%) and pyrroles/furans/pyridine (168%) as compared to the reference coffee beverage. The overall content (sum of concentrations of all 26 key aroma and flavour compounds) of the coffee of the invention is more than double that of the reference beverage mix.

**Table 3:** Concentrations of key aroma compounds [ppm dry coffee solids] in reference (dry-mixed) and coffee beverage of Example 4

| key aroma compound (odorant group) | concentration [ppm dry coffee solids] in | | |
|---|---|---|---|
| | reference coffee beverage | Example 4 coffee beverage | ratio (%) Example 4 beverage to reference beverage |
| 2-ethyl-5-methylpyrazine | 10.47 | 27.55 | 263 |
| 2-ethyl-6-methylpyrazine | 5.64 | 16.29 | 289 |
| 2,3,5-trimethylpyrazine | 21.58 | 73.32 | 340 |
| 2-ethyl-3,5-dimethylpyrazine | 13.44 | 41.99 | 312 |
| 2-ethyl-3,6-dimethylpyrazine | 4.06 | 16.77 | 413 |

(continued)

| key aroma compound *(odorant group)* | concentration [ppm dry coffee solids] in | | |
|---|---|---|---|
| | reference coffee beverage | Example 4 coffee beverage | ratio (%) Example 4 beverage to reference beverage |
| 2,3-diethyl-5-methylpyrazine | 0.52 | 1.22 | 232 |
| *Pyrazines* | *55.7* | *177.1* | *318* |
| guaiacol | 22.89 | 161.64 | 706 |
| 4-ethylguaiacol | 10.44 | 86.21 | 826 |
| 4-vinylguaiacol | 89.76 | 188.74 | 210 |
| *Phenols* | *123.1* | *436.6* | *355* |
| dimethyl sulfide | 1.67 | 2.80 | 167 |
| methanethiol | 23.93 | 37.03 | 155 |
| 2-furfurylthiol | 5.33 | 8.70 | 163 |
| 3-mercapto-3-methylbutyl formate | 0.04 | 0.03 | 75 |
| *Sulfur compound* | *31.0* | *48.6* | *157* |
| 2-methylpropanal | 21.54 | 34.36 | 159 |
| 2-methylbutanal | 127.13 | 126.36 | 99 |
| 3-methylbutanal | 92.88 | 139.17 | 150 |
| *Aldehydes* | *241.5* | *299.9* | *124* |
| 2,3-butanedione | 40.55 | 31.87 | 79 |
| 2,3-pentanedione | 16.78 | 15.76 | 94 |
| *Diketones* | *57.33* | *47.63* | *83* |
| furfural | 8.74 | 66.54 | 762 |
| 5-methylfurfural | 4.98 | 22.94 | 460 |
| furfuryl acetate | 14.94 | 16.36 | 110 |
| furfuryl alcohol | 409.24 | 1230.65 | 30 |
| *Furfuryl compounds* | *437.9* | *1336.5* | *305* |
| N-methylpyrrole | 13.37 | 17.05 | 128 |
| N-furfurylpyrrole | 0.38 | 0.95 | 251 |
| 2-methylfuran | 113.24 | 152.36 | 135 |
| pyridine | 277.40 | 509.46 | 184 |
| *Pyrroles, furans, pyridine* | *404.4* | *679.8* | *168* |
| **Overall content of key aroma compounds** | *1351* | *3026* | *224* |

**Example 6**

Sensory evaluation of product of Example 4

The product of Example 4 was evaluated by a conventional sensory analysis method: The reconstituted beverage and a reconstituted reference beverage were presented to a panel of 19 trained assessors and evaluated in a blind test according to a list of defined attributes. Panel mean score and 95% confidence interval was calculated for each attribute to highlight significant differences. Results showed a significant increase with the coffee beverage of the invention for overall, coffee and roasty aroma and flavor compared to the reference beverage.

**Claims**

1. A process of producing a coffee beverage powder, the process comprising:

   a) stripping aroma from roast and ground coffee beans and/or coffee extract with gas and/or steam
   b) extracting roast and ground coffee beans with an aqueous liquid to produce an aqueous coffee extract;
   c) preparing an aqueous composition comprising at least 5% by weight of dry matter of coffee solids extracted in step b), and at least 5% by weight of dry matter of compounds not derived from coffee selected among fat and protein;
   d) adding coffee aroma obtained in step a) to aqueous composition provided in step c); and
   e) drying the aqueous composition with added coffee aroma to produce a coffee beverage powder.

2. The process of claim 1 wherein the aqueous composition provided in step c) comprises between 1% and 60% by weight of dry matter of sugars selected from the list consisting of lactose, sucrose, fructose, maltose, dextrin, levulose, tagatose, galactose, dextrose, maltodextrin, tapiocadextrin, glucose syrup, tapioca syrup, and combinations thereof.

3. The process of any one of the preceding claims wherein the aqueous composition provided in step c) further comprises between 0.1% and 5% by weight of dry matter of buffer salts and/or stabilising salts selected from the list consisting of sodium or potassium ortho phosphates such as monophosphates, diphosphates or triphosphates, sodium or potassium polyphosphates, sodium or potassium mono- or bicarbonates, sodium or potassium citrates, hexametaphosphate, or a combination thereof.

4. The process of any one of the preceding claims wherein the aqueous composition provided in step c) further comprises between 1% and 75% by weight of dry matter of maltodextrin and/or tapiocadextrin.

5. The process of any one of the preceding claims wherein the aqueous composition provided in step c) comprises between 5% and 95% by weight of dry matter of coffee solids extracted in step c).

6. The process of any one of the preceding claims wherein the aqueous composition provided in step c) comprises between 0.5% and 50% by weight of dry matter of protein.

7. The process of any one of the preceding claims wherein a gas is injected into the aqueous composition provided in step c) before the spray drying of step e).

8. The process of claim 7 wherein the gas is selected among nitrogen, carbon dioxide and/or atmospheric air.

9. The process of any one of the preceding claims wherein coffee aroma obtained in step a) and added to the aqueous composition in step d) is in the form of an aqueous solution and/or suspension.

10. The process of any one of the preceding claims wherein coffee aroma obtained in step a) and added to the aqueous composition in step d) is dissolved or suspended in oil.

11. The process of claim 10 wherein the aqueous composition comprises fat, and the coffee aroma obtained in step a) and added to the aqueous composition in step d) is added into the fat phase of the composition.

12. The process of any one of claims 1-10 wherein the aqueous composition of step c) is heat treated at a temperature of at least 65°C before the addition of coffee aroma of step d).

13. The process of any of the preceding claims wherein the pH of the aqueous composition of step c) is adjusted to pH between 5.5 and 7.5 before spray drying.

14. The process of any of the proceeding claims wherein the drying of step e) is spray drying, freeze drying, vacuum band drying, and/or roller drying.

**Patentansprüche**

1. Verfahren zum Herstellen eines Kaffeegetränkepulvers, wobei das Verfahren Folgendes umfasst:

a) Auslösen von Aroma aus gerösteten und gemahlenen Kaffeebohnen und/oder Kaffeeextrakt mit Gas und/oder Dampf;

b) Extrahieren der gerösteten und gemahlenen Kaffeebohnen mit einer wässrigen Flüssigkeit, um einen wässrigen Kaffeeextrakt zu erzeugen;

c) Zubereiten einer wässrigen Zusammensetzung, die mindestens 5 Gew.-% Trockenmasse an in Schritt b) extrahierten Kaffeefeststoffen und mindestens 5 Gew.-% Trockenmasse an Verbindungen umfasst, die nicht aus Kaffee stammen, ausgewählt aus Fett und Protein;

d) Zusetzen von Kaffeearoma aus Schritt a) zu der in Schritt c) bereitgestellten wässrigen Zusammensetzung; und

e) Trocknen der wässrigen Zusammensetzung mit zugesetztem Kaffeearoma, um ein Kaffeegetränkepulver herzustellen.

2. Verfahren nach Anspruch 1, wobei die in Schritt c) bereitgestellte, wässrige Zusammensetzung zwischen 1 Gew.-% und 60 Gew.-% Trockenmasse an Zuckern umfasst, ausgewählt aus der Liste bestehend aus Lactose, Saccharose, Fructose, Maltose, Dextrin, Levulose, Tagatose, Galactose, Dextrose, Maltodextrin, Tapiocadextrin, Glucosesirup, Tapiocasirup und Kombinationen davon.

3. Verfahren nach einem der vorstehenden Ansprüche, wobei die in Schritt c) bereitgestellte, wässrige Zusammensetzung ferner zwischen 0,1 Gew.-% und 5 Gew.-% Trockenmasse an Puffersalzen und/oder Stabilisierungssalzen umfasst, ausgewählt aus der Liste bestehend aus Natrium- oder Kaliumorthophosphaten wie etwa Monophosphaten, Diphosphaten oder Triphosphaten, Natrium- oder Kaliumpolyphosphaten, Natrium- oder Kaliummonocarbonaten oder -bicarbonaten, Natrium- oder Kaliumcitraten, Hexametaphosphat oder einer Kombination davon.

4. Verfahren nach einem der vorstehenden Ansprüche, wobei die in Schritt c) bereitgestellte, wässrige Zusammensetzung ferner zwischen 1 Gew.-% und 75 Gew.-% Trockenmasse an Maltodextrin und/oder Tapiocadextrin umfasst.

5. Verfahren nach einem der vorstehenden Ansprüche, wobei die in Schritt c) bereitgestellte, wässrige Zusammensetzung zwischen 5 Gew.-% und 95 Gew.-% Trockenmasse an in Schritt c) extrahierten Kaffeefeststoffen umfasst.

6. Verfahren nach einem der vorstehenden Ansprüche, wobei die in Schritt c) bereitgestellte, wässrige Zusammensetzung zwischen 0,5 Gew.-% und 50 Gew.-% Trockenmasse an Protein umfasst.

7. Verfahren nach einem der vorstehenden Ansprüche, wobei vor dem Sprühtrocknen von Schritt e) ein Gas in die in Schritt c) bereitgestellte, wässrige Zusammensetzung eingespritzt wird.

8. Verfahren nach Anspruch 7, wobei das Gas ausgewählt wird aus Stickstoff, Kohlendioxid und/oder atmosphärischer Luft.

9. Verfahren nach einem der vorstehenden Ansprüche, wobei in Schritt a) erhaltenes und in Schritt d) der wässrigen Zusammensetzung zugesetztes Kaffeearoma in der Form einer wässrigen Lösung und/oder Suspension vorliegt.

10. Verfahren nach einem der vorstehenden Ansprüche, wobei in Schritt a) erhaltenes und in Schritt d) der wässrigen Zusammensetzung zugesetztes Kaffeearoma in Öl aufgelöst oder suspendiert wird.

11. Verfahren nach Anspruch 10, wobei die wässrige Zusammensetzung Fett umfasst, und das in Schritt a) erhaltene und in Schritt d) der wässrigen Zusammensetzung zugesetzte Kaffeearoma der Fettphase der Zusammensetzung zugesetzt wird.

12. Verfahren nach einem der Ansprüche 1 bis 10, wobei die wässrige Zusammensetzung aus Schritt c) vor dem Zusetzen des Kaffeearomas aus d) bei einer Temperatur von mindestens 65 °C wärmebehandelt wird.

13. Verfahren nach einem der vorstehenden Ansprüche, wobei der pH-Wert der wässrigen Zusammensetzung aus Schritt c) vor dem Sprühtrocknen auf einen pH-Wert von zwischen 5,5 und 7,5 eingestellt wird.

14. Verfahren nach einem der vorstehenden Ansprüche, wobei das Trocknen aus Schritt e) Sprühtrocknen, Gefriertrocknen, Vakuumbandtrocknen und/oder Walzentrocknen ist.

**Revendications**

1.  Procédé de production d'une poudre pour boisson au café, le procédé comprenant :

    a) extraire l'arôme de grains de café torréfiés et moulus et/ou d'extrait de café avec du gaz et/ou de la vapeur
    b) extraire les grains de café torréfiés et moulus avec un liquide aqueux pour produire un extrait de café aqueux ;
    c) préparer une composition aqueuse comprenant au moins 5 % en poids de matière sèche de solides de café extraits dans l'étape b) et au moins 5 % en poids de matière sèche de composés non dérivés du café choisis parmi de la matière grasse et de la protéine ;
    d) ajouter l'arôme de café obtenu dans l'étape a) à la composition aqueuse fournie dans l'étape c) ; et
    e) sécher la composition aqueuse avec l'arôme de café ajouté afin de produire une poudre pour boisson au café.

2.  Procédé selon la revendication 1, dans lequel la composition aqueuse fournie dans l'étape c) comprend entre 1 % et 60 % en poids de matière sèche de sucres choisis dans la liste constituée de lactose, saccharose, fructose, maltose, dextrine, lévulose, tagatose, galactose, dextrose, maltodextrine, dextrine de tapioca, sirop de glucose, sirop de tapioca et leurs combinaisons.

3.  Procédé selon l'une quelconque des revendications précédentes, dans lequel la composition aqueuse fournie dans l'étape c) comprend en outre entre 0,1 % et 5 % en poids de matière sèche de sels tampons et/ou de sels de stabilisation choisis dans la liste constituée d'orthophosphates de potassium ou sodium tels que des monophosphates, diphosphates ou triphosphates, polyphosphates de sodium ou potassium, mono- ou bicarbonates de sodium ou potassium, citrates de sodium ou potassium, hexamétaphosphate ou une combinaison de ceux-ci.

4.  Procédé selon l'une quelconque des revendications précédentes, dans lequel la composition aqueuse fournie dans l'étape c) comprend en outre entre 1 % et 75 % en poids de matière sèche de maltodextrine et/ou de dextrine de tapioca.

5.  Procédé selon l'une quelconque des revendications précédentes, dans lequel la composition aqueuse fournie dans l'étape c) comprend entre 5 % et 95 % en poids de matière sèche de solides de café extraits dans l'étape c).

6.  Procédé selon l'une quelconque des revendications précédentes, dans lequel la composition aqueuse fournie dans l'étape c) comprend entre 0,5 % et 50 % en poids de matière sèche de protéine.

7.  Procédé selon l'une quelconque des revendications précédentes, dans lequel un gaz est injecté dans la composition aqueuse fournie dans l'étape c) avant le séchage par pulvérisation de l'étape e).

8.  Procédé selon la revendication 7, dans lequel le gaz est choisi parmi l'azote, le dioxyde de carbone et/ou l'air atmosphérique.

9.  Procédé selon l'une quelconque des revendications précédentes, dans lequel l'arôme de café obtenu dans l'étape a) et ajouté à la composition aqueuse dans l'étape d) se trouve sous la forme d'une suspension et/ou d'une solution aqueuse.

10. Procédé selon l'une quelconque des revendications précédentes, dans lequel l'arôme de café obtenu dans l'étape a) et ajouté à la composition aqueuse dans l'étape d) est dissous ou suspendu dans de l'huile.

11. Procédé selon la revendication 10, dans lequel la composition aqueuse comprend de la matière grasse et l'arôme de café obtenu dans l'étape a) et ajouté à la composition aqueuse dans l'étape d) est ajouté dans la phase grasse de la composition.

12. Procédé selon l'une quelconque des revendications 1 à 10, dans lequel la composition aqueuse de l'étape c) est traitée par voie thermique à une température d'au moins 65 °C avant l'ajout de l'arôme de café de l'étape d).

13. Procédé selon l'une quelconque des revendications précédentes, dans lequel le pH de la composition aqueuse de l'étape c) est ajusté à un pH entre 5,5 et 7,5 avant le séchage par pulvérisation.

14. Procédé selon l'une quelconque des revendications précédentes, dans lequel le séchage de l'étape e) est un séchage par pulvérisation, une lyophilisation, un séchage sur bande à vide et/ou un séchage sur rouleau.

**EP 3 054 778 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9952378 A
- WO 0113735 A
- WO 2011076564 A
- EP 0532959 A
- EP 0916267 A
- EP 0826308 A
- US 6455093 B